# EUROPEAN PATENT SPECIFICATION

(11) **EP 1 709 872 B1**
(45) Date of publication and mention of the grant of the patent: **13.05.2009**
(21) Application number: 06006234.6
(22) Date of filing: 27.03.2006
(51) Int. Cl.: A21C 9/08

(54) **Spacing and alignment device, particularly for lines for producing and processing rolled-up food products**
Vorrichtung zur raümlichen Einteilung und Ausrichtung, insbesondere für Anlagen zur Herstellung und Bearbeitung von aufgerollten Nahrungsmittel.
Dispositif pour séparer et l'alignement, notamment pour installations de production et de traitement de produits alimentaires enroulés

(30) Priority: 05.04.2005 IT VR20050042
(43) Date of publication of application: 11.10.2006
(73) Proprietor: Doge Food Processing Machinery S.r.l., 36015 Schio (Vicenza) (IT)
(72) Inventor: Bertini, Angelo, 36016 Thiene (Prov.of Vicenza) (IT)
(74) Representative: Alagem Modiano, Lara S.

(56) References cited:
- EP-A- 0 482 917
- EP-A- 0 846 420
- EP-A- 0 882 400
- EP-A- 1 192 863
- DE-C1- 3 903 746
- FR-A- 2 442 587
- US-A- 6 158 315

## Description

The present invention relates to a spacing and alignment device for portions of dough, particularly adapted to be used on lines for producing and processing rolled-up food products.

Currently, lines for the production of rolled-up food products, such as croissants, are constituted typically by a device for producing a ribbon of dough which is then fed to a conveyor belt.

A first cutting device is generally positioned along the conveyor belt and is designed to cut and separate the continuous ribbon of dough into strips having a certain width, which is a function of the size and geometric characteristics of the final product.

Downstream of the first cutting device, a second cutting device is provided, which is adapted to divide the respective strips of dough into triangular dough shapes.

Downstream of such device, a device is provided for spacing and aligning the triangular dough shapes, which is designed to orient the triangular dough shapes so that their base is oriented in the direction of advancement of the conveyor belt used to move said shapes.

The spacing and alignment device can be provided for example by using a supporting element for a plurality of sets of handling devices, each of which is constituted by a number of handling elements moved by a chain along a closed curved path, which has at least one engagement portion which faces the conveyor belt on which the mutually spaced shapes to be rotated advance.

When the handling elements travel, moved by the chain, along the engagement portion, they engage the surface of the shapes that lies upward during use, and by way of a mechanism usually of the cam type they turn clockwise or counterclockwise through a 90° angle, entraining in the rotation the respective shape, which accordingly, at the end of the engagement portion, has its base oriented in the direction of advancement of the conveyor belt.

By way of example, spacing and alignment devices of this kind are disclosed in US 5,409,721.

As an alternative, spacing and alignment devices have been proposed which are constituted by a circular element, which faces the conveyor belt on which the shapes to be turned are moved.

In this case, the spacing and alignment device is provided with grip elements for the shapes to be turned, which are arranged at a perimetric region of said circular element and on its face directed toward the conveyor belt.

The circular element is turned about an axis which is substantially perpendicular to its plane of arrangement and therefore to the plane of arrangement of the shapes being conveyed, rotationally entraining said shapes with it. A device of this type is disclosed for example in German patent application no. DE 41 00 945 A1.

French patent application FR- 2 442 587 discloses yet another spacing and alignment device for portions of dough.

Although the devices described above are currently widely used, they are not devoid of drawbacks.

First of all, they are often difficult to synchronize and moreover structurally very complicated.

Another drawback of the devices currently in use resides in that it is impossible to act directly on the device in order to allow its correct operation as the number, dimensions and mutual distance of the ribbons of dough change.

In this case, presently it is in fact necessary to act on the line and replace completely the entire supporting structure associated with the corresponding sets of handling elements.

Moreover, it has been noted that currently commercially available spacing and alignment devices have a limited speed, which is substantially determined by the limitations of the merely mechanical movement of the handling elements.

Finally, almost all the commercially available devices have large dimension.

DE 39 03 746 C1 discloses a device for cutting, separating, and positioning pieces of dough, having a combination of features as included in the pre-characterizing portion of the appended claim 1.

The aim of the present invention is to eliminate or at least reduce drastically the drawbacks noted above in known types of spacing and alignment devices.

In particular, within this aim, an object of the present invention is to provide a spacing and alignment device which allows to change its configuration quickly and effectively.

More particularly, an important object of the present invention is to allow, in a reduced time and with a limited number of operations, the correct operation of the device as the number of ribbons of dough to be processed changes or as the dimensions of the products to be aligned change.

Another object of the present invention is to provide a spacing and alignment device which is reliable and safe in use.

Still another object of the invention is to provide a spacing and alignment device which has a competitive production cost, so that its use is advantageous from an economical standpoint as well.

In accordance with the invention, there is provided a spacing and alignment device, particularly for portions of dough, as defined in the appended claims.

Further characteristics and advantages of the invention will become better apparent from the description of some preferred but not exclusive embodiments of a spacing and alignment device according to the invention, illustrated by way of non-limiting example in the accompanying drawings, wherein:
Figure 1 is a top elevation view of a portion of a line for producing and processing rolled-up food products, which is associated with a spacing and alignment device according to the invention;

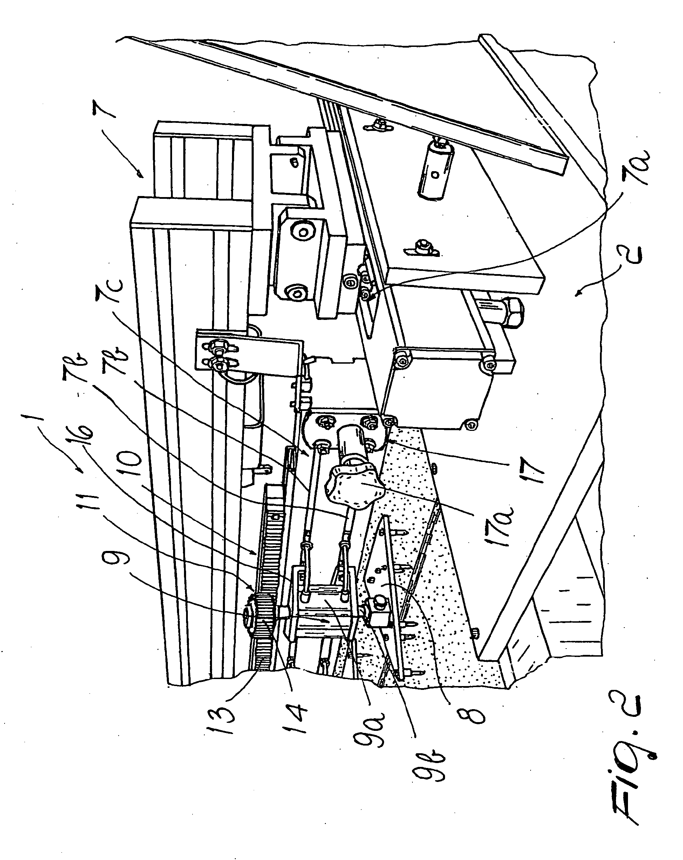

Figure 2 is a perspective view of a portion of the spacing and alignment device;
Figure 3 is a view, similar to Figure 2, in which the spacing and alignment device is provided with means for cutting the ribbon of dough;
Figure 4 is a sectional view, taken along a substantially vertical plane, of a portion of the spacing and alignment device;
Figure 5 is a side view of a handling element;
Figure 6 is a sectional top view of the handling element shown in Figure 5.

In the examples of embodiments that follow, individual characteristics, given in relation to specific examples, may actually be interchanged with other different characteristics that exist in other examples of embodiments.

Moreover, it is noted that anything found to be already known during the patenting process is understood not to be claimed and to be the subject of a disclaimer.

With reference to the figures, a spacing and alignment device, particularly for portions of dough, generally designated by the reference numeral 1, comprises a supporting framework 2, which is associated with a line 3 for conveying at least one continuous ribbon of dough.

The conveyance line 3 is associated with means for cutting the continuous dough ribbon (or, more frequently, ribbons) 100 into portions of dough 6.

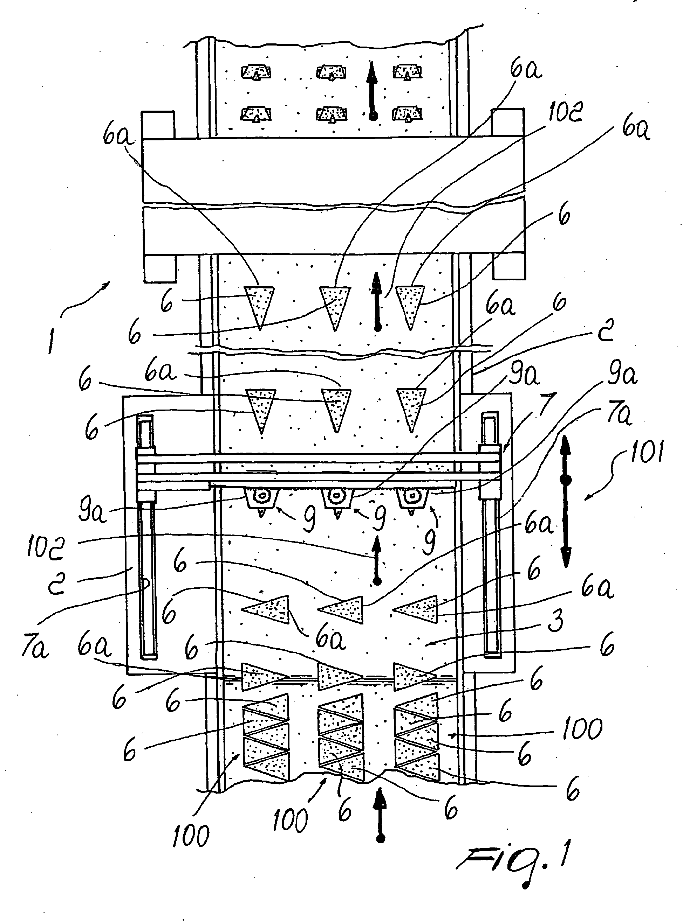

In particular, as shown in the top view of Figure 1, the cutting means, not shown, cut each of the continuous ribbons 100 into portions of dough 6 which have a triangular shape; the bases 6a of each shape are arranged alternately at the sides of the respective ribbon of dough 100.

According to the present invention, the spacing and aligment device 1 has a supporting structure 7 for at least one handling element 8.

The or each handling element 8 is connected kinematically to an actuation device 9, so that it can move along an actuation direction which is substantially perpendicular to the plane of arrangement of the portions of dough 6 in order to move from a disengagement condition, in which the or each handling element 8 is spaced from the portions of dough 6, to an engagement condition, in which the handling element 8 (or handling elements 8) engages at least one portion of a respective portion of dough 6.

Moreover, the spacing and alignment device 1 is provided with means for moving the handling element 8, adapted to turn said handling element 8, at least when it is in the engagement position, about a respective rotation axis, which is substantially parallel to the actuation direction.

According to a preferred embodiment, the supporting structure 7 can move, with respect to the supporting framework 2, with a back-and-forth motion along the movement direction 101 of the conveyance line 3.

In particular, the supporting structure 7, or at least a portion thereof which is rigidly coupled to the handling elements, can be coupled slidingly, for example by interposing one or more straight guides 7a, to the supporting framework 2 and simultaneously can be connected kinematically to a movement element, not shown in the figures, which is adapted to move with a back-and-forth motion, along the movement direction 101, the supporting structure 7 and therefore the or each handling element 8 supported thereby.

Advantageously, when the handling element or elements 8 is/are engaged with the respective portion of dough 6, the supporting structure 7 has a direction of motion which matches the direction of advancement 102 of the portions of dough 6 which engage the respective handling element 8 and a speed which at least matches the advancement speed of said portion of dough 6.

It is convenient for the advancement speed of the handling elements 8 to be greater than the advancement speed of the portions of dough 6, so as to turn (and at the same time space) the portions of dough 6 in succession, without the risk for the rotating portion of dough 6 to collide with the portion of dough 6 which is located directly upstream and is advancing.

In greater detail, the actuation device comprises a linear actuator, in which the actuator body 9a is rigidly coupled to the supporting structure 7 and the stem 9b rotates rigidly with a respective handling element 8.

Advantageously, the supporting structure 7 is associated with at least one guiding element 10, which can move with a reciprocating motion transversely with respect to the direction of advancement of the supporting structure 7.

Between the guiding element 10 and the handling element or elements 8 there are kinematical connection means 11, which are adapted to convert the reciprocating motion of the guiding element 10 into a rotary motion of the or each handling element 8 about the respective rotation axis.

According to a preferred embodiment, the stem 9b of each linear actuator 9 is supported rotatably, for example by interposing bearings 12, by the respective actuator body 9a about its longitudinal direction and therefore about the rotation axis of the respective handling element 8.

In this case, it is convenient for the kinematical connection means 11 to act between the guiding element 10 and the or each stem 9b.

In this regard, the guiding element 10 can be constituted by a rack 13, while the kinematical connection means 11 comprise a pinion 14, which rotates rigidly with a respective stem 9b and which meshes with the rack 13.

As clearly shown in the top view of Figure 1, the supporting structure 7 is associated typically with a plurality of actuator bodies 9a, which have a respective stem 9b rigidly coupled to a respective handling element 8 and to a respective pinion 14 which meshes with the rack 13.

According to another important aspect of the invention, the actuator bodies 9a and generally the handling elements 8 can be fixed detachably to the supporting structure 7.

In this regard, it is possible to provide longitudinal slots 7b, which are formed in a cross-member 7c supported by the supporting structure 7 and can be engaged slidingly by locking retainers which can be fastened, by means of Allen screws 15, to supporting brackets 16 of the actuator body 9a.

In this way, it is possible to arrange along the cross-member 7c, at the selected distance, a number of handling elements 8 suitable for the various operating conditions of the production line.

Moreover, it is possible to provide means 17 for the detachable anchoring of the cross-member 7c to the supporting structure 7, which are constituted for example by two end knobs 17a, which support a threaded stem.

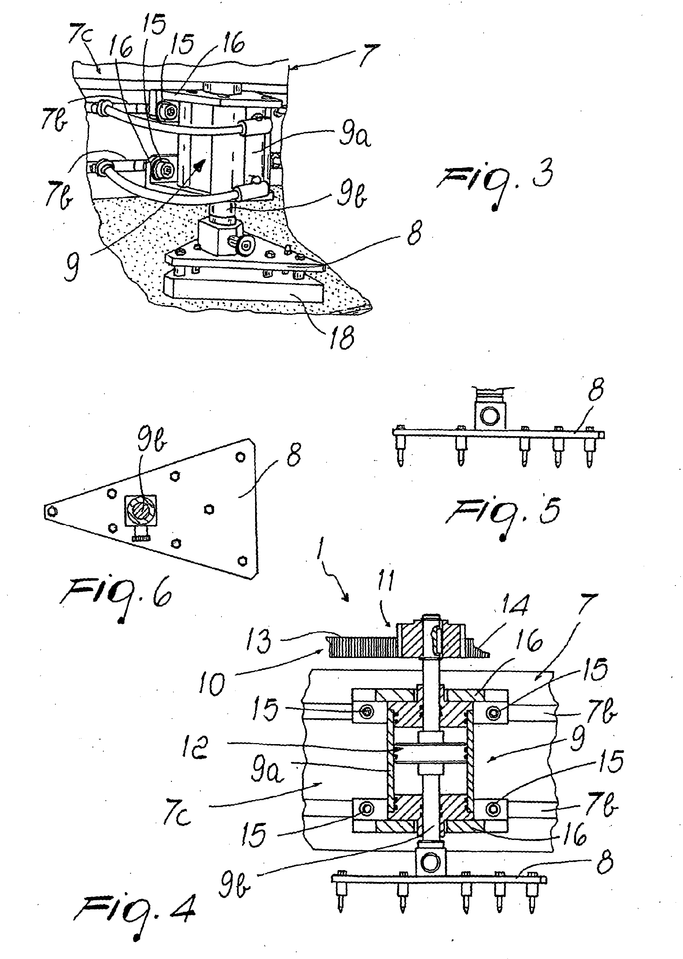

With reference in particular to the perspective view shown in Figure 3, the cutting means can be provided by using a blade element 18 associated with a respective handling element 8. In this case, the handling element 8 acts directly on the ribbon of dough 100 in order to cut and at the same time turn the portion of dough 6.

Operation of the spacing and alignment device according to the present invention is evident from what has been described above.

In practice, the linear actuators 9, driven by a pneumatic circuit, move the respective handling elements 8 into a condition of engagement with the portion of dough 6 that advances along the line. At the same time, actuation means actuate the supporting structure 7 so as to move it along the straight guide 7a, ensuring, during the step of engagement of the handling elements 8 with the portions of dough 6, the same direction and the same speed between the handling elements 8 and the respective portions of dough 6 that they engage.

In this condition, the rack 13 moves along a direction which is parallel to the longitudinal direction of the cross-member 7c, thus turning the stems 9b and the handling elements 8 associated therewith, with a consequent rotation of the portions of dough 6.

Once the rotation, generally through 90°, of the portions of dough 6 has ended, the supporting structure 7 is moved, again along the straight guide 7a but in the opposite direction with respect to the direction of advancement of the portions of dough 6, and at the same time the linear actuators 9 move the handling elements 8 to the disengagement condition.

The rack 13, by keeping constant its direction of advancement, entrains rotationally the respective handling element 8 in order to ensure adequate engagement of the handling elements 8 with the portions of dough 6 directly upstream, since as clearly shown in Figure 1 the portions of dough which directly follow each other have their bases 6c arranged on opposite sides.

The speed of the rack 13 and, of course, of the supporting structure 7 is synchronized according to the advancement speed of the portions of dough 6, so as to ensure that once the rack has returned to the initial condition it can engage immediately the portion of dough 6 directly upstream of the one turned previously.

All the characteristics of the invention described above as advantageous, convenient or the like may also be omitted or be replaced with equivalents.

The invention thus conceived is susceptible of numerous modifications and variations, all of which are within the scope of the appended claims.

In practice it has been found that the invention has achieved the intended aim and objects in all of its embodiments.

In particular, it is evident that the replacement of the cross-member 7c with the corresponding handling elements 8 associated therewith is quick and effective, by acting on the removable anchoring means 17, with great advantages during format changing, i.e., transition from one number of rows to another number.

In practice, the materials used, as well as the dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A spacing and alignment device (1), particularly for portions of dough, comprising a supporting framework (2), which is associated with a line (3) for conveying at least one continuous ribbon (100) of dough, for means for cutting said continuous ribbon (100) of dough into portions of dough (6), a supporting structure (7) for at least one handling element (8), which is connected kinematically to an actuation device and can move along an actuation direction which is substantially perpendicular to the plane of arrangement of said portions of dough (6) in order to pass from a disengagement condition, in which said handling element (8) is spaced from said portions of dough (6), to an engagement condition, in which said handling element (8) engages at least one portion of a respective portion of dough (6), means for moving said handling element being provided which are adapted to turn said handling element (8), at least in said engagement condition, about a rotation axis which is substantially parallel to said actuation direction, said actuation device comprising a linear actuator (9), in which the actuator body (9a) of said linear actuator (9) is rigidly coupled to said supporting structure (7) and the stem (9b) of said linear actuator (9) is rigidly coupled to a respective handling element (8), **characterized in that** a rack (13) is slidably connected with said supporting structure and a plurality of linear actuators (9) each have a pinion (14) that is connected to each respective stem (9b) thereof and that meshes with said rack (13).

2. The spacing and alignment device (1) according to claim 1, **characterized in that** said supporting structure (7) can move with a back-and-forth motion along the movement direction of said conveyance line (3), with said handling element (8) in the engagement condition, said motion of said supporting structure (7) having a direction which matches the direction of advancement of said portion of dough (6) in engagement with said handling element (8) and a speed which at least matches the advancement speed of said portion of dough (6).

3. The spacing and alignment device (1) according to claim 2, **characterized in that** said handling element (8), in the engagement condition, has a speed which is higher than the advancement speed of said advancing portions of dough (6).

4. The spacing and alignment device (I) according to one or more of the preceding claims, **characterized in that** it comprises means for the removable fixing of said handling elements (8) to said supporting structure (7).

5. The spacing and alignment device according to claim 4, **characterized in that** said detachable fixing means act between said supporting structure (7) and said actuator bodies (9a).

6. The spacing and alignment device (1) according to one or more of the preceding claims, **characterized in that** said cutting means comprise a blade element (18), which is associated with a respective handling element (8).

7. The spacing and alignment device (1) according to one or more of the preceding claims, **characterized in that** it comprises a cross-member (7c) for supporting said handling elements (8), said cross-member (7c) being fixable by way of detachable anchoring means (17) to said supporting structure (7).

## Patentansprüche

1. Vorrichtung (1) zur räumlichen Einteilung und Ausrichtung, insbesondere für Teigportionen, umfassend einen Stützrahmen (2), dem ein Förderband (3) zum Fördern zumindest eines kontinuierlichen Teigbands (100) zugeordnet ist, Mittel zum Schneiden des kontinuierlichen Teigbands (100) in Teigportionen (6), einer Stützstruktur (7) für zumindest ein Handhabungselement (8), welches kinematisch mit einer Antriebsvorrichtung verbunden ist und entlang einer zur Ebene der Anordnung der Teigportionen (6) im wesentlichen senkrechten Antriebsrichtung bewegbar ist, um von einer Außereingriffstellung, in der das Handhabungselement (8) von den Teigportionen (6) entfernt ist, in eine Eingriffsstellung, in der das Handhabungselement (8) mindestens eine Portion einer jeweiligen Teigportion (6) in Eingriff nimmt, zu laufen, wobei Mittel zum Bewegen des Handhabungselements vorgesehen werden, welche eingerichtet sind, um das Handhabungselement (8) zumindest in der Eingriffsstellung, um eine Rotationsachse zu drehen, welche im wesentlichen parallel zur Antriebsrichtung ist, wobei die Antriebsvorrichtung einen Linearantrieb (9) umfasst, bei dem der Antriebskörper (9a) des Linearantriebs (9) fest an der Stützstruktur (7) befestigt ist und der Schaft (9b) des Linearantriebs (9) fest mit einem entsprechenden Handhabungseleinent (8) verbunden ist, **dadurch gekennzeichnet, dass** eine Zahnstange (13) mit der Stützstruktur verschiebbar verbunden ist und ein jeder einer Vielzahl von Linearantrieben (9) ein Antriebsritzel (14) hat, das mit dem jeweiligen Schaft (9b) verbunden ist und mit der Zahnstange (13) kämmt.

2. Vorrichtung (1) zur räumlichen Einteilung und Ausrichtung nach Anspruch 1, **dadurch gekennzeichnet, dass** die Stützstruktur (7) mit einer Vor- und Rückwärtsbewegung entlang der Bewegungsrichtung des Förderbands (3) bewegbar ist, wobei das Handhabungselement (8) in der Eingriffsstellung ist, und wobei die Bewegung der Stützstruktur (7) eine Richtung hat, die mit der Förderrichtung der im Eingriff mit dem Handhabungselement (8) befindlichen Teigportion (6), übereinstimmt, und eine Geschwindigkeit hat, welche mindestens gleich der Fördergeschwindigkeit der Teigportion (6) ist.

3. Vorrichtung (1) zur räumlichen Einteilung und Ausrichtung nach Anspruch 2, **dadurch gekennzeichnet, dass** das Handhabungselement (8) in der Eingriffsstellung eine Geschwindigkeit hat, welche höher ist als die Fördergeschwindigkeit der fortschreitenden Teigportionen (6).

4. Vorrichtung (1) zur räumlichen Einteilung und Ausrichtung nach einem oder mehreren der voranstehenden Ansprüche, **dadurch gekennzeichnet, dass** sie Mittel zum lösbaren Befestigen des Handhabungselements (8) an der Stützstruktur (7) umfasst.

5. Vorrichtung (1) zur räumlichen Einteilung und Ausrichtung nach Anspruch 4, **dadurch gekennzeichnet, dass** die lösbaren Befestigungsmittel zwischen der Stützstruktur (7) und dem Antriebskörper (9a) wirken.

6. Vorrichtung (1) zur räumlichen Einteilung und Ausrichtung nach einem oder mehreren der voranstehenden Ansprüche, **dadurch gekennzeichnet, dass** das Schneidmittel ein Klingenelement (18) umfasst, welches mit dem jeweiligen Handhabungselement (8) verknüpft ist.

7. Vorrichtung (1) zur räumlichen Einteilung und Ausrichtung nach einem oder mehreren der voranstehenden Ansprüche, **dadurch gekennzeichnet, dass** es eine Traverse (7c) zum Stützen des Handhabungselements (8) umfasst, wobei die Traverse (7c) mittels lösbarer Befestigungsmittel (17) an der Stützstruktur (7) befestigbar ist.

## Revendications

1. Dispositif d'alignement et d'espacement (1), particulièrement pour des portions de pâte, comprenant un châssis de support (2), qui est associé à une ligne (3) pour transporter au moins une bande continue (100) de pâte, pour des moyens destinés à découper ladite bande continue (100) de pâte en portions de pâte (6), une structure de support (7) pour au moins un élément de manipulation (8), qui est connecté de manière cinématique à un dispositif d'actionnement et peut se déplacer le long d'une direction d'actionnement qui est sensiblement perpendiculaire au plan d'agencement desdites portions de pâte (6) afin de passer d'un état de désengagement, dans lequel ledit élément de manipulation (8) est espacé des dites portions de pâte (6), à un état d'engagement, dans lequel ledit élément de manipulation (8) vient en prise avec au moins une partie d'une portion respective de pâte, des moyens pour déplacer ledit élément de manipulation étant prévus adaptés pour faire tourner ledit élément de manipulation (8), au moins dans ledit état d'engagement, autour d'un axe de rotation qui est sensiblement parallèle à ladite direction d'actionnement, ledit dispositif d'actionnement comprenant un actionneur linéaire (9), dans lequel le corps de l'actionneur (9a) dudit actionneur linéaire (9) est couplé de manière rigide à ladite structure de support (7) et la tige (9b) dudit actionneur linéaire (9) est couplée de façon rigide à un élément de manipulation respectif (8), **caractérisé en ce que** une crémaillère (13) est connectée de manière coulissante à ladite structure de support et chacun d'une pluralité d'actionneurs linéaires (9) possède un pignon (14) qui est connecté à la tige respective de chacune (9b) et qui s'engrène à la dite crémaillère (13).

2. Dispositif d'alignement et d'espacement (1) selon la revendication 1, **caractérisé en ce que** ladite structure de support (7) peut se déplacer avec un déplacement de va-et-vient le long de la direction de déplacement de la dite ligne de transport (3), avec le dit élément de manipulation (8) dans l'état d'engagement, ledit déplacement de ladite structure de support (7) ayant une direction qui correspond à la direction d'avancement de ladite portion de pâte (6) en engagement avec ledit élément de manipulation (8) et une vitesse qui au moins s'adapte à la vitesse d'avancement de ladite portion de pâte (6).

3. Dispositif d'alignement et d'espacement (1) selon la revendication 2, **caractérisé en ce que** ledit élément de manipulation (8), dans l'état d'engagement, a une vitesse qui est plus élevée que la vitesse d'avancement desdites portions de pâte (6) avançant.

4. Dispositif d'alignement est d'espacement (1) selon l'une ou plusieurs des revendications précédentes, **caractérisé en ce qu'**il comprend des moyens pour la fixation amovible desdits éléments de manipulation (8) à ladite structure de support (7).

5. Dispositif d'alignement et d'espacement selon la revendication 4, **caractérisé en ce que** les moyens de fixation détachables agissent entre ladite structure de support (7) et lesdits corps d'actionnement (9a).

6. Dispositif d'alignement et d'espacement (1) selon l'une ou plusieurs des revendications précédentes **caractérisé en ce que** lesdits moyens de découpe comprennent un élément de lame (18), qui est associé à un élément de manipulation respectif (8).

7. Dispositif d'alignement et d'espacement (1) selon l'une ou plusieurs des revendications précédentes, **caractérisé en ce qu'**il comprend une traverse (7c) pour supporter lesdits éléments de manipulation (8), ladite traverse (7c) pouvant être fixée par des moyens d'ancrage détachables (17) à la dite structure de support (7).
